# NEUE EUROPÄISCHE PATENTSCHRIFT

(11) **EP 1 341 693 B2**
(45) Veröffentlichungstag und Bekanntmachung des Hinweises auf die Entscheidung über den Einspruch: **31.07.2013**
(45) Hinweis auf die Patenterteilung: 16.02.2005
(21) Anmeldenummer: 01990284.0
(22) Anmeldetag: 12.12.2001
(51) Int. Cl.: B63H 5/125

(54) **STELLANTRIEB FÜR EINEN, INSBESONDERE ELEKTRISCH ANGETRIEBENEN, RUDERPROPELLER EINES SEESCHIFFES**
ACTUATOR FOR A RUDDER PROPELLER, IN PARTICULAR AN ELECTRICALLY DRIVEN PROPELLER OF A SEA-GOING VESSEL
MECANISME DE COMMANDE POUR L'HELICE DE GOUVERNAIL, EN PARTICULIER A ENTRAINEMENT ELECTRIQUE, D'UN NAVIRE HAUTURIER

(30) Priorität: 14.12.2000 DE 10062354
(43) Veröffentlichungstag der Anmeldung: 10.09.2003
(73) Patentinhaber: Siemens Aktiengesellschaft, 80333 München (DE)
(72) Erfinder: RZADKI, Wolfgang, 21509 Glinde (DE); HARTIG, Rainer, 22089 Hamburg (DE); KÖRNER, Andre, 21244 Buchholz (DE); SCHULZE HORN, Hannes, 45966 Gladbeck (DE)
(86) Internationale Anmeldenummer: PCT/DE2001/004681
(87) Internationale Veröffentlichungsnummer: WO 2002/047973

(56) Entgegenhaltungen:
- WO-A-00/37308
- WO-A-01/81170
- US-A- 3 614 563
- "SIEMENS-SCHOTTEL-PROPULSOR (SSP) THE PODDED ELECTRIC DRIVE WITH PERMANENTLY EXCITED MOTOR" SIEMENS-SCHOTTEL-PROPULSOR (SSP) THE PODDED ELECTRIC DRIVE WITH PERMANENTLY EXCITED MOTOR, XX, XX, 7. März 1997 (1997-03-07), Seiten A-B,1-24, XP000198528

## Beschreibung

Die Erfindung betrifft einen Stellantrieb für einen, insbesondere elektrisch angetriebenen, Ruderpropeller eines Seeschiffes, der im Heckbereich an einem drehbarem Schaft unterhalb des Schiffsbodens angeordnet ist.

Ruderpropeller großer Schiffe werden durch Stellmotore bewegt, die im allgemeinen als Hydraulikmotore ausgebildet sind. Hydraulikmotore haben den Nachteil, dass an den Übergangsstellen von den Hydraulikleitungen zu den Motoren Undichtigkeiten auftreten können, insbesondere bei längerer Vibrationsbeanspruchung, wie sie bei Ruderpropellern vorliegt. Die benötigte Hydraulikanlage (Pumpen und Motore) hat ein relativ hohes Gewicht und einen erheblichen Platzbedarf.

Zur Vermeidung der vorstehenden Nachteile wurden bereits elektrische Stellmotore vorgeschlagen, so z.B. in Einmotorenausführung in der WO 00/15495. Eine Ausführung eines elektrischen Stellmotors für einen großen mechanischen Ruderpropeller wurde auch bereits von der Anmelderin 1998 an die Fachfirma KAMEWA geliefert. Hierbei handelt es sich um einen elektrischen Stellmotor mit einem Schneckenantrieb für den Zahnkranz des Ruderpropellerschaftes. Derartige Schneckenantriebe sind selbsthemmend und erlauben ein großes Übersetzungsverhältnis.

Aus der WO 89/05262 ist weiterhin ein Ruderpropeller mit zwei Antriebsmotoren bekannt, die ebenso wie die vorgenannte Schrift und die vorgenannte Lieferung den Ruderpropeller über eine Scheibe mit Außenverzahnung drehen, dabei weist der Antrieb der in der WO 89/05262 gezeigt ist und der wahlweise Hydraulik- oder Elektromotore haben kann, zwei Antriebsmotore auf.

Eine ähnliche Konstruktion wird auch in der WO 00/44617 für Hydraulikmotore als Stellmotore gezeigt.

Ein Stellantrieb mit einem elektrischen Motor zum Drehen des Schafts eines Ruderpropellers ist zudem aus der WO-A-0037308 bekannt.

Aus der US 4 634 389 (D2) ist ein Stellantrieb für einen elektrisch angetriebenen Ruderpropeller eines Schiffes bekannt. Der Ruderpropeller ist an einem drehbaren Schaft unterhalb des Schiffsbodens vorgesehen und kann am Heckbereich des Schiffes angeordnet sein. Zur Drehung des Schafts sind zwei Stellmotoren vorgesehen, wobei es sich hierbei um elektrische Stellmotoren handeln kann. Die Stellmotoren wirken über Ritzel auf einen in Verbindung mit dem oberen Schaftteil stehenden Zahnkranz ein.

Es ist Aufgabe der vorliegenden Erfindung, einen solchen elektrischen Stellantrieb zum Drehen des Schafts eines Ruderpropellers derart zu verbessern, dass eine effiziente Feststellung des Schafts des Ruderpropellers ermöglicht wird.

Die Aufgabe wird dadurch gelöst, dass der Schaft des Ruderpropellers über zumindest zwei elektrische Stellmotoren drehbar ist, die über Ritzel auf einen in Verbindung mit dem oberen Schaftteil stehenden und im Inneren des oberen Schaftteils angeordneten Zahnkranz wirkend und dazu im Verbund steuer- und regelbar ausgebildet sind, und wobei die Stellmotoren derart ausgebildet und angesteuert sind, dass mit ihnen ein permanentes Drehmoment aufgebracht wird, und wobei das permanente Drehmoment der mindestens zwei Stellmotoren zur Zahnkranzverspannung gegeneinanderwirkend aufgebracht wird.

Somit entfällt eine zusätzliche Feststellbremse für den Schaft und es kann sogar durch eine geeignete elektrische Ansteuerung, eine Schwingungsdämpfung des Schaftes vorgenommen werden. Durch die von den Propellern ausgehenden Druckfelder ergibt sich eine permanente Anregung des Schaftes, insbesondere bei elektrischen Ruderpropellern mit einem Zugpropeller, da die elektrischen Ruderpropeller einen Schaft mit großem Querschnitt erfordern. Dabei kann durch die gegenseitige Verspannung der mindestens zwei Stellmotore ein Schlagen der Ritzel mit Sicherheit vermieden werden und eine Bremse entfallen.

So ergibt sich eine besonders platzsparend ausgebildete Ausführung eines Stellantriebs für große Ruderpropeller, bei der auf Hydraulikelemente vollständig verzichtet werden kann. Die mit einer Hydraulikanlage verbundenen Schwierigkeiten in Bezug auf die Dichtigkeit der Verrohrung, auf das Vorhalten von Hydrauliköl und den großen Platzbedarf können vermieden werden. Die Reparaturmannschaft eines mit dem erfindungsgemäßen Stellantrieb ausgerüsteten Schiffes braucht nicht für das Hantieren und Warten von Hydraulikkomponenten ausgebildet sein, es genügt die Kenntnis der Behandlung von Elektromotoren.

In Ausgestaltung der Erfindung ist vorgesehen, dass die Stellmotore als permanent erregte elektrische Motore (PEM) ausgebildet sind, die über Ritzel mit einem Zahnkranz in Verbindung stehen. Permanent erregte elektrische Motore haben den Vorteil, dass sie auch bei niedrigen Drehzahlen ein hohes Drehmoment abgeben können. So ist sehr vorteilhaft die Verwendung von relativ kleinen, platzsparenden Motoren möglich. Entsprechende permanent erregte elektrische Motore sind z.B. aus dem Werkzeugmaschinenbau bekannt.

In weiterer Ausgestaltung der Erfindung ist vorgesehen, dass die Stellmotore als Getriebemotore ausgebildet sind, wobei die Getriebe ein Ausgangsritzel aufweisen. So können vorteilhaft gängige Drehstrommotore eingesetzt werden, wobei der zusätzliche Platzbedarf durch die Getriebe nicht sehr bedeutend ist. Sowohl bei der Verwendung von permanent erregten elektrischen Motoren als auch von üblichen Drehstrommotoren mit angeflanschten Getrieben, sind die elektrischen Stellmotore so klein, dass sie ohne größere Schwierigkeiten im Schaftoberteil angeordnet werden können. So ergibt sich eine erheblichere Reduzierung der Bauhöhe des Stellantriebs, so dass der Laderaum oberhalb der Ruderpropeller besser als bisher ausgenutzt werden kann.

Von besonderem Vorteil ist es, wenn die Stellmotore nach Kennlinien steuer- und regelbar sind. So kann für die Stellmotore bei der Durchführung von Stellbewegungen ein Sanftanlauf realisiert werden, wobei beispielsweise einer der Stellmotore antreibend und der andere - natürlich mit geringem Drehmoment - bremsend wirkt. Durch die Verwendung einer Kennlinienregelung ist es dabei besonders vorteilhaft möglich, auf die dynamischen Eigenschaften insbesondere von elektrischen Ruderpropellern mit zwei Propellern einzugehen, die in besonderer Weise beim Verschwenken durch die unterschiedliche Abströmung in unterschiedlichen Bereichen des Schiffsnecks je nach Stellung unterschiedlich große Stellkräfte zur Durchführung einer gleichmäßigen Drehbewegung benötigen.

Die Stellmotore weisen vorteilhaft Umdrehungszahl- und Drehrichtungsmessgeräte auf. So kann die genaue Stellung des Schaftes über einfache Zähler festgestellt werden und eine zusätzliche Drehstellungs-Sensorik entfällt.

Vorteilhaft ist der Stellantrieb mit der elektrisch/elektronisch arbeitenden Schiffsfahranlage verbunden. So ist es möglich, eine direkte Beeinflussung des Stellantriebs über die Schiffsfahranlage zu erreichen. Die Schiffsfahranlage enthält dabei vorteilhaft Speicher mit Optimalkurven, ggf. auch Grenzkurven, mit denen die Abhängigkeit der Drehgeschwindigkeit der Ruderpropeller von der Schiffsgeschwindigkeit und/oder der Momentanlage der Ruderpropeller berücksichtigt sind. Hierdurch können insbesondere zu schnelle Verstellungen, die zu Manövern führen würden, die der Schiffsgeschwindigkeit nicht angepasst sind, vermieden werden. Es ist bekannt, elektrische Ruderpropeller mit einem Hafenmodus und einem Freifahrtmodus zu versehen. Zwischen diesen beiden Betriebszuständen ergeben sich jedoch noch eine Vielzahl anderer Betriebszustände, die ebenfalls sicher beherrscht werden müssen. Dies ist durch die erfindungsgemäß vorgebbare Kennlinie möglich.

Es ist weiterhin vorgesehen, dass die Energieversorgungseinheiten, die zum Betrieb der Stellmotoren notwendig sind, eine unterbrechungsfreien Stromversorgung (USV) aufweisen. So ist für einen jederzeit sicheren Betrieb der Stellantriebe gesorgt. Die Stellmotore werden vorteilhaft über Zwischenkreisumrichter mit Energie versorgt, wobei die Zwischenkreise einen Bremswiderstand aufweisen. So ist es möglich, nicht nur dem Beginn der Drehung des Schaftes durch den Stellantrieb, sondern auch seine Beendigung schnell und gesteuert vorzunehmen.

Der erfindungsgemäße Stellantrieb entwickelt seine Vorteile insbesondere beim Antrieb eines Ruderpropellers, der mit zwei Einzelpropellern an den Enden ausgerüstet ist. Ein derartiger Antrieb ist besonders kritisch in seiner Steuerung, daher wirkt sich der erfindungsgemäß vorgeschlagene elektrische Direktantrieb mit den Möglichkeiten zur direkten Steuerung und Regelung über Kennlinien besonders günstig aus. Darüber hinaus kann das Schwingungsverhalten des Ruderpropellers noch günstig beeinflusst werden.

Die Erfindung wird anhand von Zeichnungen näher erläutert, aus denen weitere, auch erfindungswesentliche, Einzelheiten entnehmbar sind. Im einzelnen zeigen:
- FIG 1: einen Ruderpropeller mit seinen Energieversorgungseinrichtungen in schematischer Ansicht,
- FIG 2: die elektrische Schaltung von vier Stellmotoren in einer besonders günstigen Ausführung,
- FIG 3: eine lineare Kennlinie des Momentenverlaufs und
- FIG 4: einen anderen Kennlinienverlauf des Drehmoments

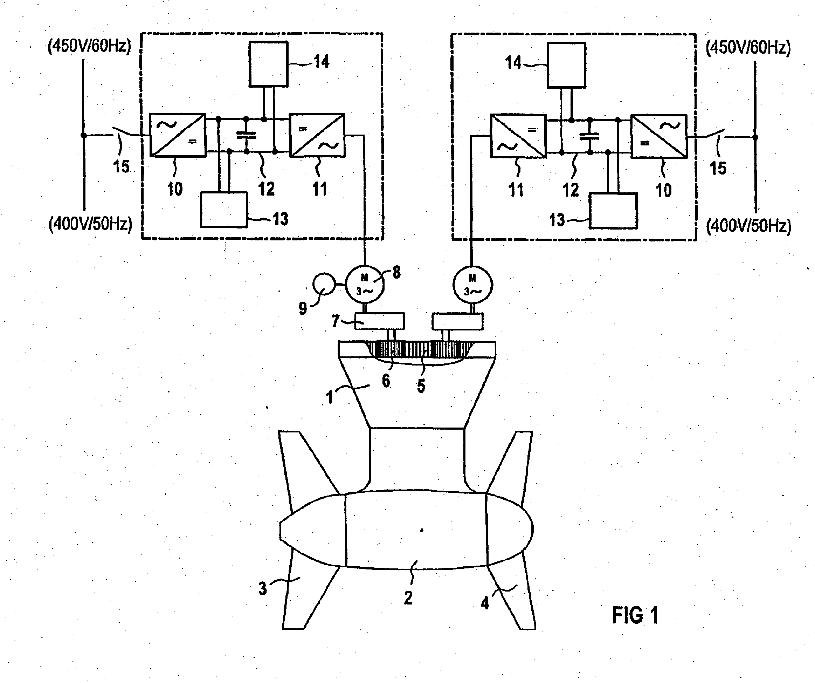

In FIG 1 bezeichnet 1 den Schaft eines Ruderpropellers und 2 das Gehäuse eines elektrischen Motors, der am Unterteil des Ruderpropellerschafts 1 angebracht ist. 3 bezeichnet einen Propeller, der von dem Motor in dem Gehäuse 2 angetrieben wird und 4 einen zweiten Propeller, der ebenfalls von dem Motor in dem Gehäuse 2 angetrieben wird. Zwischen den beiden Propellern 3 und 4 befindet sich eine vorzugsweise durchgehende, nicht näher gezeigte Motorwelle. Anstelle des Gehäuses 2 für einen elektrischen Motor kann auch das Gehäuse eines Getriebes für einen mechanisch angetriebenen Ruderpropeller angeordnet sein, dann befindet sich in der Mitte des Schaftes 1 die Antriebswelle für den mechanisch angetriebenen Ruderpropeller und der Schaft 1 kann entsprechend schlanker ausgeführt werden.

Im Oberteil des Schaftes 1 befindet sich ein vorteilhaft mit einer Innenverzahnung ausgebildeter Zahnkranz 5, der durch Ritzel 6 über Getriebe 7 von den Elektromotoren 8 angetrieben wird. Bei der Verwendung von besonders drehmomentstarken Elektromotoren, z.B. PEM-Motoren, können ggf. die Getriebe 7 entfallen. Dann ist es besonders einfach, die Motoren 8 innerhalb des Oberteils des Schaftes 1 anzuordnen. Die Motoren 8 weisen Umdrehungszähler und Umdrehungsrichtungszähler 9 auf, über die die Ruderlage erfassbar ist.

Der Stellantrieb ist an das Bordnetz angeschlossen, das wahlweise 400 V/50 Hz oder 450 V/60 Hz aufweist. Über ein Schaltelement 15 wird ein Zwischenkreisumrichter mit dem Eingangsteil 10 und dem Ausgangsteil 11 sowie dem Zwischenkreis 12 mit Energie aus dem Mittelspannungsbordnetz versorgt. An dem Zwischenkreis 12 ist vorteilhaft ein Bremswiderstand 13 angeordnet. Für den Fall eines Ausfalls des Bordnetzes ist eine unterbrechungsfreie Stromversorgung 14 vorgesehen, die vorteilhaft mit dem Gleichstromzwischenkreis 12 verbunden ist. So ist sichergestellt, dass ein Ruderlegen auch bei Ausfall des Bordnetzes möglich ist.

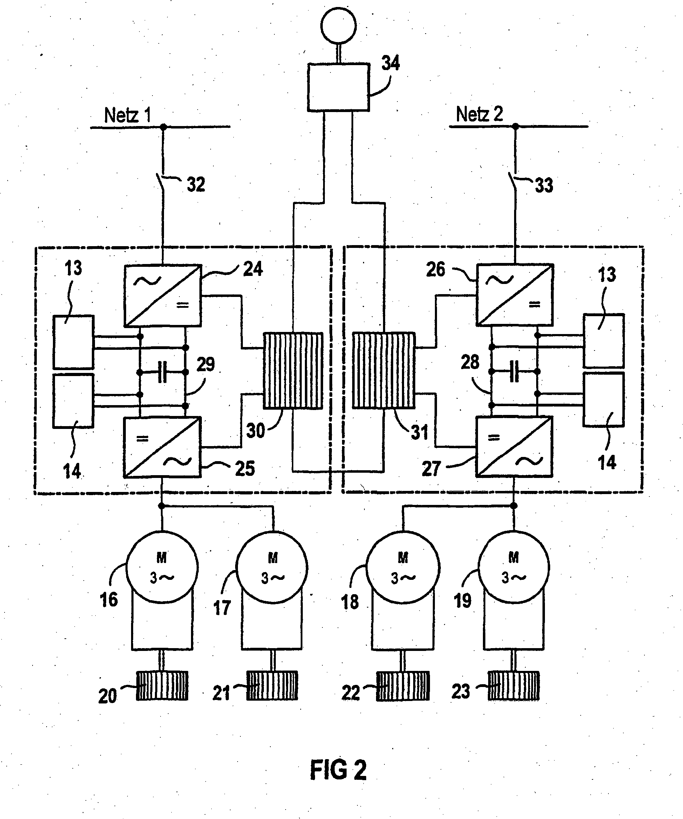

In FIG 2, die einen Stellantrieb mit vier Motoren zeigt, es können jedoch mit dem gleichen Schaltungsaufbau auch sechs, acht oder sogar noch mehr Motoren für den Stellantrieb vorgesehen werden, dies ist von der Schiffsgröße und den Aufgaben des Schiffes abhängig, bezeichnen 16, 17, 18, 19 die vier Motoren. Diese wirken auf Ritzel 20, 21, 22, 23, die in der gezeigten Ausführung als normale Zahnritzel ausgebildet sind. Es können jedoch ebenso Schneckenritzel oder andere mechanische Elemente verwendet werden. Die Motoren werden jeweils in Gruppen zu zweien von Umrichtern 24, 25 und 26, 27 mit Energie versorgt. Die Motoren sind in nichtdargestellter Weise einzeln oder in Gruppen ansteuerbar, so dass eine Verspannung einzelner Ritzel gegeneinander, ein Eingreifen bei Drehbewegungen nacheinander und die Aufbringung eines vorher bestimmten Moments möglich sind. Die Umrichter weisen Zwischenkreise 28 und 29 auf und werden durch Einheiten 30 und 31 von unterbrechungsfreien Stromversorgungen für den Notfall mit elektrischer Energie versorgt. Anstelle der unterbrechungsfreien Stromversorgung für die einzelnen Gruppen kann auch eine gemeinsame unterbrechungsfreie Stromversorgung 34, wie sie beispielsweise für den Betrieb der Brücke existiert, verwendet werden. Die einzelnen Gruppen sind durch Leistungsschalter 32 und 33 mit dem Bordnetz verbunden, vorzugsweise mit einem Bordnetz in redundanter Ausführung.

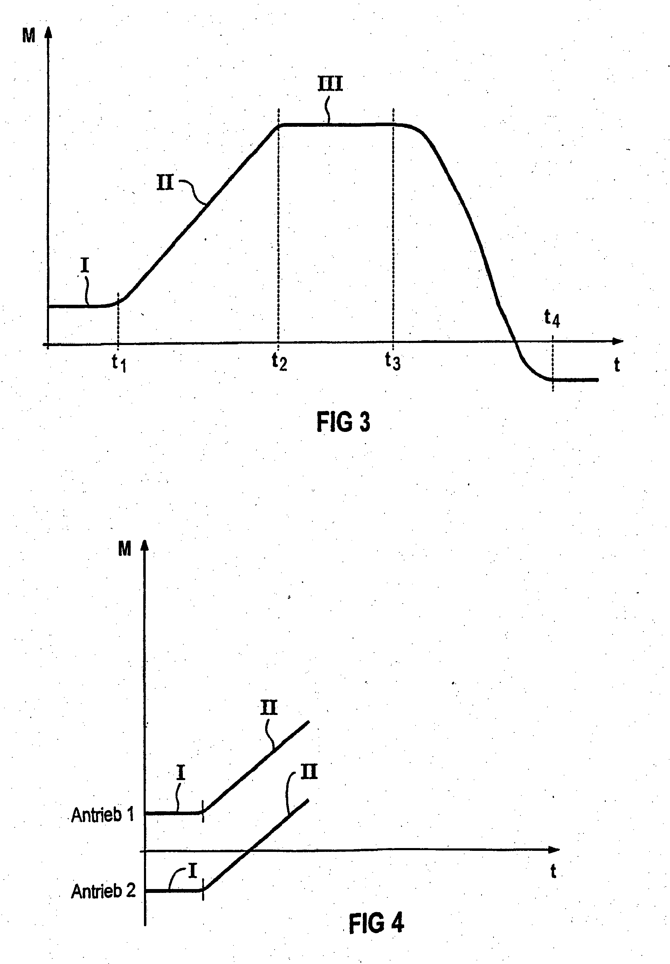

Eine Kennlinie in einfachster Form zeigt die FIG 3, wobei der Bereich I das permanent aufgebrachte Moment zeigt, das verhindert, dass ein Schlagen des jeweiligen Ritzel stattfinden kann. II bezeichnet das Hochlaufen bei konstanter Drehmomenterhöhung und III das Antriebsmoment, wenn der Elektromotor seine Nenndrehzahl erreicht hat.

In FIG 4 ist eine abweichende Kennlinie gezeigt, die ein besonders sanftes Hochlaufen des Antriebs bewirkt. Im Abschnitt IV in FIG 4 ist eine stetige Verzögerung der Drehmomenterhöhung vorgesehen bis das Nennmoment erreicht wird.

Die Kennlinien in FIG 3 und 4 sind nur beispielhaft zu verstehen, es versteht sich, dass diese schiffsspezifisch ausgebildet sind und durch andere Kennlinien überlagert werden, die auf die Drehwinkelabhängigkeit des aufzubringenden Drehmoments ausgerichtet sind. Hierdurch wird den unterschiedlichen Anströmverhältnissen beim Ausschwenken des Ruderpropellers Rechnung getragen. Dies ist insbesondere notwendig, wenn unter dem Schiff Strömungsleitkörper angeordnet sind, die in ihrem Strömungsschatten eine verlangsamte Anströmung der Ruderpropeller bewirken. Dann ergeben sich bei einem Ausschwenken des Ruderpropellers Änderungen in Bezug auf die Drehkraftanforderung, die geschwindigkeitsabhängig sind und denen vorteilhaft durch Drehmomentveränderungen der Motore begegnet wird.

## Patentansprüche

1. Stellantrieb für einen, insbesondere elektrisch angetriebenen, Ruderpropeller eines Seeschiffes, der im Heckbereich an einem drehbaren Schaft (1) unterhalb des Schiffsbodens angeordnet ist, wobei der Schaft (1) über zumindest zwei elektrische Stellmotoren (8) drehbar ist, die über Ritzel (6) auf einen in Verbindung mit dem oberen Schaftteil stehenden und im Inneren des oberen Schaftteils angeordneten Zahnkranz (5) wirkend und dazu im Verbund steuer- und regelbar ausgebildet sind, und wobei die Stellmotoren (8) derart ausgebildet und angesteuert sind, daß mit ihnen ein permanentes Drehmoment aufgebracht wird, und wobei das permanente Drehmoment der mindestens zwei Stellmotoren (8) zur Zahnkranzverspannung gegeneinanderwirkend aufgebracht wird.

2. Stellantrieb nach Anspruch 1, **dadurch gekennzeichnet, daß** die Stellmotoren (8) als permanent erregte elektrische Motoren (PEM) ausgebildet sind, die über Ritzel (6) mit dem Zahnkranz (5) in Verbindung stehen.

3. Stellantrieb nach Anspruch 1 oder 2, **dadurch gekennzeichnet, daß** die Stellmotoren (8) als Getriebemotoren ausgebildet sind, wobei die Getriebe ein Ausgangsritzel aufweisen.

4. Stellantrieb nach Anspruch 1, 2 oder 3, **dadurch gekennzeichnet, daß** die Stellmotoren (8) im Schaftoberteil angeordnet sind.

5. Stellantrieb nach einem der vorhergehenden Ansprüche, **dadurch gekennzeichnet, daß** die Stellmotoren (8) nach Kennlinien steuer- und regelbar sind.

6. Stellantrieb nach einem der vorhergehenden Ansprüche, **dadurch gekennzeichnet, daß** die Stellmotoren (8) Umdrehungszahl- und Drehrichtungsmessgeräte (9) aufweisen.

7. Stellantrieb nach einem der vorhergehenden Ansprüche, **dadurch gekennzeichnet, daß** die Stellmotoren (8) Schalteinrichtungen (15), Steuergeräte und Regler aufweisen, die mit einer elektrisch/elektronisch arbeitenden Schiffsfahranlage verbunden sind.

8. Stellantrieb nach Anspruch 7, **dadurch gekennzeichnet, daß** für die Stellmotoren (8) Stellantriebsdaten, vorzugsweise in Abhängigkeit von der Schiffsgeschwindigkeit und dem vorgesehenen Schiffsdrehwinkel, gespeichert sind, insbesondere in einem nichtflüchtigen Speicher.

9. Stellantrieb nach einem der vorhergehenden Ansprüche, **dadurch gekennzeichnet, daß** die Energieversorgungseinheiten, die zum Betrieb der Stellmotoren (8) notwendig sind, eine unterbrechungsfreie Stromversorgung (14) (USV) aufweisen.

10. Stellantrieb nach einem der vorhergehenden Ansprüche, **dadurch gekennzeichnet, daß** die Stellmotoren (8) über Spannungs-Zwischenkreisumrichter (10, 11) mit Energie versorgbar sind und vorzugsweise einen Bremswiderstand (13) aufweisen.

11. Stellantrieb nach einem der vorhergehenden Ansprüche, **dadurch gekennzeichnet, daß** der zu drehende Ruderpropeller im wesentlichen zylindrisch ausgebildet ist und je einen Propeller (3 bzw. 4) an seinen Enden aufweist, wobei die Verstellkennlinien für diese Form optimiert sind.

## Claims

1. Control drive for a steering propeller, in particular an electrically driven steering propeller, for a seagoing vessel which is arranged in the stern area on a shaft (1) which can be rotated underneath the bottom of the ship, in which case the shaft (1) can be rotated via at least two electric control motors (8) which are designed such that they act via pinions (6) on a toothed rim (5) which is connected to the upper shaft part and arranged in the interior of the upper shaft part, and for this purpose can be controlled and regulated jointly, and with the control motors (8) being designed and driven such that they apply a permanent torque, and in which case the permanent torque from the at least two control motors (8) is applied such that they counteract one another, in order to brace the toothed rim.

2. Control drive according to Claim 1, **characterized in that** the control motors (8) are in the form of electric motors (PEM) with permanent magnet excitation, which are connected to the toothed rim (5) via pinions (6).

3. Control drive according to Claim 1 or 2, **characterized in that** the control motors (8) are in the form of transmission motors, with the transmissions having an output pinion.

4. Control drive according to Claim 1, 2 or 3, **characterized in that** the control motors (8) are arranged in the shaft upper part.

5. Control drive according to one of the preceding claims, **characterized in that** the control motors (8) can be controlled and regulated in accordance with characteristics.

6. Control drive according to one of the preceding claims, **characterized in that** the control motors (8) have rotation speed and rotation direction measurement devices (9).

7. Control drive according to one of the preceding claims, **characterized in that** the control motors (8) have switching devices (15), controls and regulators, which are connected to an electrically/electronically operating ship propulsion system.

8. Control drive according to Claim 7, **characterized in that** control drive data is stored for the control motors (8), preferably as a function of the ship's velocity and the intended ship's turn angle, in particular in a nonvolatile memory.

9. Control drive according to one of the preceding claims, **characterized in that** the power supply units which are required to operate the control motors (8) have an uninterruptible power supply (14) (UPS).

10. Control drive according to one of the preceding claims, **characterized in that** the control motors (8) can be supplied with power via voltage intermediate circuit converters (10, 11), and preferably have a braking resistor (13).

11. Control drive according to one of the preceding claims, **characterized in that** the steering propeller that is to be rotated is designed to be essentially cylindrical and has a propeller (3 or 4) at each of its ends, with the adjustment characteristics being optimized for this form.

## Revendications

1. Mécanisme de commande d'une hélice de gouvernail, en particulier à entraînement électrique, d'un navire hauturier, lequel mécanisme de commande est placé dans la région de poupe d'un arbre rotatif ( 1 ) au-dessous de la cale du navire, l'arbre ( 1 ) pouvant être mis en rotation par au moins deux moteurs de commande électriques ( 8 ), qui sont conformés de façon à pouvoir agir via un pignon ( 6 ) sur une couronne dentée ( 5 ) reliée à la partie d'arbre supérieure et placée à l'intérieur de la partie d'arbre supérieure et de façon à pouvoir avoir à cet effet en combinaison une action de commande et de régulation, et les moteurs de commande ( 8 ) étant conformés et commandés de façon à appliquer un couple de rotation permanent et le couple de rotation permanent des au moins deux moteurs de commande ( 8 ) étant appliqué de façon à s'opposer à la déformation de la couronne dentée.

2. Mécanisme de commande suivant la revendication 1, **caractérisé en ce que** les moteurs de commande ( 8 ) sont conformés en moteurs électriques excités en permanence ( PEM ), qui sont reliés via un pignon ( 6 ) à la couronne dentée ( 5 ).

3. Mécanisme de commande suivant la revendication 1 ou 2, **caractérisé en ce que** les moteurs de commande ( 8 ) sont conformés en motoréducteurs, les réducteurs comportant un pignon de sortie.

4. Mécanisme de commande suivant la revendication 1, 2 ou 3, **caractérisé en ce que** les moteurs de commande sont placés dans la partie supérieure de l'arbre.

5. Mécanisme de commande suivant l'une des revendications précédentes, **caractérisé en ce que** les moteurs de commande ( 8 ) peuvent être commandés et régulés conformément à des courbes caractéristiques.

6. Mécanisme de commande suivant l'une des revendications précédentes, **caractérisé en ce que** les moteurs de commande ( 8 ) comportent des appareils de mesure du nombre de tours et du sens de rotation.

7. Mécanisme de commande suivant l'une des revendications précédentes, **caractérisé en ce que** les moteurs de commande ( 8 ) comportent des dispositifs de commutation ( 15 ), des appareils de commande et des régulateurs, qui sont reliés à une installation de pilotage de navire, fonctionnant avec des moyens électriques ou électroniques.

8. Mécanisme de commande suivant la revendication 7, **caractérisé en ce que** des données de commande des moteurs de commande ( 8 ), avantageusement fonction de la vitesse du navire et de l'angle prévu de rotation du navire, sont mémorisées, en particulier dans une mémoire rémanente.

9. Mécanisme de commande suivant l'une des revendications précédentes, **caractérisé en ce que** les unités d'alimentation en énergie, qui sont nécessaires au fonctionnement des moteurs de commande ( 8 ), comportent une alimentation en courant ininterrompue ( 14 ) ( USV ).

10. Mécanisme de commande suivant l'une des revendications précédentes, **caractérisé en ce que** les moteurs de commande ( 8 ) peuvent être alimentés en énergie par des onduleurs à circuit intermédiaire de tension ( 10, 11 ) et comportent avantageusement une résistance de frein ( 13 ).

11. Mécanisme de commande suivant l'une des revendications précédentes, **caractérisé en ce que** l'hélice de gouvernail à faire tourner est conformée de façon sensiblement cylindrique et comporte une hélice ( 3 et 4 ) à chacune de ses extrémités, les courbes caractéristiques de déplacement étant optimisées pour cette forme.
